# EUROPÄISCHE PATENTSCHRIFT

(11) **EP 0 959 274 B1**
(45) Veröffentlichungstag und Bekanntmachung des Hinweises auf die Patenterteilung: **29.12.2004**
(21) Anmeldenummer: 99109598.5
(22) Anmeldetag: 14.05.1999
(51) Int. Cl.: F16J 15/08

(54) **Zylinderkopfdichtung**
Cylinder head gasket
Joint de culasse

(30) Priorität: 16.05.1998 DE 19822143
(43) Veröffentlichungstag der Anmeldung: 24.11.1999
(73) Patentinhaber: Elring Klinger AG, 72581 Dettingen (DE)
(72) Erfinder: Bleidt, Michael, 72581 Dettingen (DE); Diez, Armin, 73252 Lenningen (DE); Schmucker, Frank, 89585 Ehingen (DE)
(74) Vertreter: Sparing - Röhl - Henseler Patentanwälte

(56) Entgegenhaltungen:
- EP-A- 0 627 581
- DE-A- 19 601 324
- DE-C- 19 513 361
- DE-C- 19 520 695

## Beschreibung

Die Erfindung betrifft eine Zylinderkopfdichtung nach dem Oberbegriff des Anspruchs 1.

Aus EP 0 627 581 A1 ist eine derartige Zylinderkopfdichtung bekannt, bei der zwei gesickte Deckbleche mit einem dazwischen befindlichen Trägerblech vorgesehen sind, wobei ein sich entlang des Brennkammerrandes der Brennkraftmaschine erstreckender Federwegbegrenzer, auch als Stopper bezeichnet, der auch zur Brennraumüberhöhung dient, wodurch der Zylinderkopf der Brennkraftmaschine eine definierte Vorspannung beim Einspannen der Zylinderkopfdichtung entlang des Brennkammerrandes erhält, mit dem Trägerblech verschweißt ist. Um das Verschweißen zu erleichtern, ist der getrennt hergestellte Federwegbegrenzer zunächst im Schnitt trapezförmig ausgebildet und wird dann benachbart zum Brennkammerrand auf eine gewünschte Höhe flach gedrückt, so daß er zueinander parallele Auflageflächen für die planen Abschnitte der Deckbleche radial einwärts von den Sicken erhält. Dementsprechend wird mit der anfänglichen Trapezform keine Funktion der Zylinderkopfdichtung beeinflußt.

Bei Brennkraftmaschinen mit weniger steifen Zylinderköpfen, etwa aus einer Al-Legierung, wurde festgestellt, daß eine "Abrollbewegung" des Zylinderkopfes über die Breite des Federwegbegrenzers erfolgt. Dies hat zur Folge, daß es aufgrund hoher Kantenpressung zu Biege- und Schubspannungen in den Deckblechen und im Trägerblech der Zylinderkopfdichtung kommt, die letztlich zu Rissen in den Deckblechen und im Trägerblech führen können.

Aus DE 196 01 324 A1 ist ebenfalls eine metallische Zylinderkopfdichtung der eingangs genannten Art bekannt, bei der zwischen zwei gesickten Deckblechen ein Falzbördelblech vorgesehen ist, dessen Umbiegungsendabschnitt sich in Radialrichtung der Brennkammeröffnung vor den Rändern der Deckbleche befindet, so daß dieser keiner Pressung unterworfen wird. Der bezüglich der Sicken wirksame Teil des Umbiegungsabschnittes hat gleichbleibende Dicke.

Aus DE 195 31 232 C2 ist eine metallische Zylinderkopfdichtung der eingangs genannten Art bekannt, bei der der den Federwegbegrenzer gleichbleibender Dicke für die Sicken der Deckbleche bildende umgebördelte Bereich des Falzbördelblechs im Stegbereich zwischen den Brennkammer-öffnungen, wenn dieser sehr schmal ist, weggelassen ist.

Aufgabe der Erfindung ist es daher, eine Zylinderkopfdichtung nach dem Oberbegriff des Anspruchs 1 zu schaffen, deren Lebensdauer durch eine Abrollbewegung des Zylinderkopfes über die Breite des Federwegbegrenzers möglichst wenig beeinträchtigt wird.

Diese Aufgabe wird entsprechend dem kennzeichnenden Teil des Anspruchs 1 gelöst.

Durch entsprechendes Abschrägen des Federwegbegrenzers wird die Kantenpressung reduziert. Dies hat zur Folge, daß die Biege- und Schubspannungen in dem wenigstens einen Deckblech und in einem gegebenenfalls vorhandenen Trägerblech reduziert werden können. Somit kann die Gefahr von Rissen in den Deckblechen und im Trägerblech vermindert werden. Anstelle einer Linienauflage bzw. -pressung ergibt sich eine flächige Auflage und somit eine geringere partielle Pressung zwischen Zylinderkopf und zugewandtem Deckblech und daraus resultierend ein geringerer Verschleiß. Der Federwegbegrenzer ist somit an die Deformation des Zylinderkopfes angepaßt.

Hierbei ist durch eine entsprechende Änderung des Winkels der Abschrägung eine Anpassung an verschiedene Zylinderkopfsteifigkeiten möglich. Der Winkel der Abschrägung wird dabei über Einspannversuche ermittelt.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt im Schnitt und ausschnittweise eine Zylinderkopfdichtung.

Fig. 2 bis 5 zeigen ausschnittweise weitere Ausführungsformen im Schnitt.

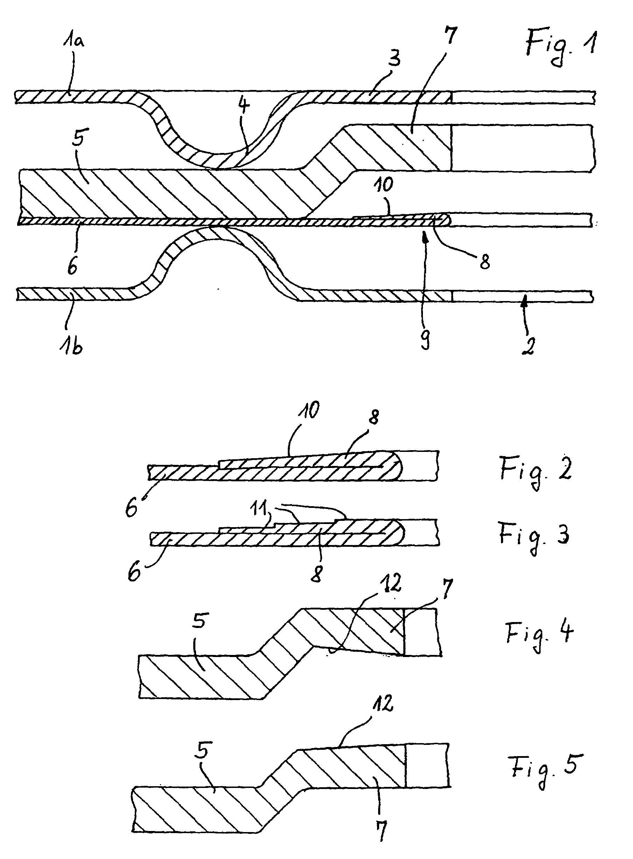

Die in Fig. 1 dargestellte Zylinderkopfdichtung umfaßt zwei Deckbleche 1a, 1b, von denen das Deckblech1a im eingebauten Zustand der Zylinderkopfdichtung dem Zylinderkopf der Brennkraftmaschine, für die die Zylinderkopfdichtung konzipiert ist, zugekehrt ist, während das Deckblech 1b dem Zylinderblock zugewandt ist. Die Deckbleche 1a, 1b sind mit einer oder üblicherweise mit mehreren, nebeneinander angeordneten Öffnungen 2 entsprechend den Brennkammern der Brennkraftmaschine versehen. Die Deckbleche 1a, 1b sind zudem um jede Öffnung 2 herum mit Abstand zu dieser unter Belassung eines geraden Blechabschnitts 3 im Öffnungsrandbereich mit einer um die jeweilige Öffnung 2 umlaufenden, ringförmigen Sicke 4 versehen, wobei die Sicken 4 der beiden Deckbleche 1a, 1b mit ihren Scheiteln einander zugekehrt sind.

Zwischen den beiden Deckblechen 1a, 1b befindet sich eine Zwischenlage, die bei dem in Fig. 1 dargestellten Ausführungsbeispiel aus einem Trägerblech 5 und einem Falzbördelblech 6 gebildet wird. Das Trägerblech 5 ist im Öffnungsrandbereich mit einem gekröpften Abschnitt 7 versehen, in dessen Bereich ein durch Umbördeln des Falzbördelblechs 6 entstandener Falzbördel 8 angeordnet ist. Der Falzbördel 8 bildet zusammen mit den darüber und darunter befindlichen Abschnitten des Trägerblechs 5 und des Falzbördelblechs 6 einen Federwegbegrenzer 9 von größerer Gesamtblechstärke als im übrigen Bereich der Zylinderkopfdichtung, der einerseits dazu dient, den Federweg der zugehörigen Sicke(n) 4 zu begrenzen, und andererseits am Brennkammerrand eine Brennraumüberhöhung bildet, so daß entlang des Öffnungsrandbereichs der höchste Pressungsdruck bei eingespannter Zylinderkopfdichtung herrscht.

Der umgebördelte Falzbördel 8 ist hierbei mit einer sich radial auswärts in ihrer Dicke abnehmend Abschrägung 10 versehen, so daß die Flächenpressung im Bereich des Federwegbegrenzers 9 über dessen Breite in radialer Richtung unter Betriebsbedingungen, d.h. bei laufender Brennkraftmaschine, bei der diese entsprechend erwärmt ist, im wesentlichen homogen ist. Hierbei wird zweckmäßigerweise von den kritischsten Betriebsbedingungen ausgegangen, z.B. Vollast. Im kalten, eingebauten Zustand steht der radial äußere Abschnitt der Abschrägung 10 gegebenenfalls noch nicht unter Pressung.

Als Falzbördelblech 6 wird üblicherweise ein (Edelstahl-)Blech einer Stärke von etwa 0,12 bis 0,15 mm verwendet, wobei beispielsweise über eine Falzbördelbreite von 2,5 mm eine Abschrägung 10 von etwa 3/100 mm vorgesehen sein kann. Die Abschrägung 10 kann auch durch Stufen 11 gebildet sein, vgl. Fig. 3. Gleichzeitig hierzu kann eine Abschrägung der Stufen vorgesehen sein. Zweckmäßigerweise wird die Höhendifferenz in Form der Abschrägung 10 und/oder Stufen 11 durch Prägen hergestellt. Hierbei drückt sich gewöhnlich der Falzbördel 8 etwas in das Falzbördelblech 6 ein, vgl. Fig. 2. Bei dem Trägerblech 5 handelt es sich üblicherweise um ein Blech aus kaltgewalztem Stahl, während die Deckbleche 1a, 1b aus Federstahl bestehen.

Das Falzbördelblech 6 kann aber auch an der dem Falzbördel 8 angewandten Seite entsprechend radial nach außen in der Höhe abnehmend ausgebildet sein.

Ferner kann das Trägerblech 5 im Bereich des abgekröpften Abschnitts 7 an der dem Deckblech 1a oder dem Falzbördelblech 6 zugewandten Seite eine entsprechende Abschrägung 12 aufweisen, während der umgefalzte Bereich des Falzbördelblechs 6 in seiner Stärke praktisch gleichbleibend ist, vgl. Fig. 4, 5.

Der gesamte Federwegbegrenzer 9 kann auch massiv am Trägerblech 5 durch entsprechende Verformung und in seiner Stärke radial nach außen hin abnehmend oder als in eine entsprechende zur Öffnung 2 konzentrische Öffnung eingesetzter, in seiner Stärke radial nach außen abnehmender Ring ausgebildet sein, wobei sich dann ein Falzbördelblech 6 erübrigt.

Gegebenenfalls kann das Deckblech 1b, das dem Zylinderblock zugewandt ist, entfallen.

Gegebenenfalls kann die Zylinderkopfdichtung auch einlagig sein, d.h. nur das gesickte Deckblech 1a umfassen, das auf der Seite, auf der sich der Scheitel der Sicke 4 befindet, einen beispielsweise aufgeschweißten Federwegbegrenzer 9 trägt, der entsprechend abgeschrägt ist.

Zweckmäßigerweise ist der Federwegbegrenzer 9 bzw. das Falzbördelblech 6 im Biegebereich an der Öffnung 2 gerundet, um dort Kantenpressungen zu vermeiden.

## Patentansprüche

1. Metallische Zylinderkopfdichtung für eine Brennkraftmaschine mit einem im eingebauten Zustand dem Zylinderkopf der Brennkraftmaschine zugewandten Deckblech (1a), das mit einer oder mehreren, nebeneinander angeordneten Öffnungen (2) entsprechend den Brennkammern der Brennkraftmaschine versehen ist, wobei das Deckblech (1a) um jede Öffnung (2) herum mit Abstand zu dieser unter Belassung eines geraden Blechabschnitts (3) im Öffnungsrandbereich eine Sicke (4) aufweist, benachbart zu der um jede Öffnung (2) herum radial einwärts von der jeweiligen, dem Zylinderkopf mit ihrem Scheitel abgekehrten Sicke (4) ein Federwegbegrenzer (9) für die Sicke (4), der gleichzeitig eine Brennkammerüberhöhung der Dichtung bildet, angeordnet ist, **dadurch gekennzeichnet, daß** der Federwegbegrenzer (9) vom Öffnungsrandbereich radial auswärts bis zu seinem äußeren Rand in seiner Dicke derart abnehmend ist, daß die Flächenpressung im Bereich des Federwegbegrenzers (9) über dessen Breite unter Betriebsbedingungen im wesentlichen homogen ist.

2. Zylinderkopfdichtung nach Anspruch 1, **dadurch gekennzeichnet, daß** die Stärkenabnahme des Federwegbegrenzers (9) durch eine Abschrägung (10, 11) gebildet ist.

3. Zylinderkopfdichtung nach Anspruch 1 oder 2, **dadurch gekennzeichnet, daß** die Stärkenabnahme des Federwegbegrenzers (9) gestuft vorgesehen ist.

4. Zylinderkopfdichtung nach einem der Ansprüche 1 bis 3, **dadurch gekennzeichnet, daß** ein Trägerblech (5) vorgesehen ist, das einen gekröpften Abschnitt (7) aufweist, der einen Falzbördel (8) eines Falzbördelblechs (6) aufnimmt.

5. Zylinderkopfdichtung nach Anspruch 4, **dadurch gekennzeichnet, daß** der Falzbördel (8) in seiner Dicke abnehmend ausgebildet ist.

6. Zylinderkopfdichtung nach Anspruch 4, **dadurch gekennzeichnet, daß** der gekröpfte Abschnitt (7) in seiner Dicke abnehmend ausgebildet ist.

7. Zylinderkopfdichtung nach einem der Ansprüche 1 bis 3, **dadurch gekennzeichnet, daß** der Federwegbegrenzer (9) einstückig mit einem Trägerblech (5) ausgebildet ist.

8. Zylinderkopfdichtung nach einem der Ansprüche 1 bis 3, **dadurch gekennzeichnet, daß** der Federwegbegrenzer (9) radial in einer entsprechenden Öffnung eines Trägerblechs (5) angeordnet ist.

9. Zylinderkopfdichtung nach einem der Ansprüche 1 bis 8, **dadurch gekennzeichnet, daß** der Federwegbegrenzer (9) bzw. dessen Falzbördelblechabschnitt im Bereich der Öffnung (2) gerundet ist.

## Claims

1. Metal cylinder head gasket for an internal combustion engine, comprising a cover plate (1a), which in the installed state faces the cylinder head of the internal combustion engine, which cover plate (1a) is provided with one or more openings (2) arranged one next to the other in correspondence with the combustion chambers of the internal combustion engine, the cover plate (1a) having a bead (4) extending around each opening (2) and spaced apart therefrom to leave a straight plate portion (3) in the region of the edge of the opening, adjacent to which bead (4) there is arranged around each opening (2), radially inwards of the bead (4) that has its apex facing away from the cylinder head, a resilient displacement limiter (9) for the bead (4), which simultaneously defines the gasket's increase in the height of the combustion chamber, **characterised in that** the resilient displacement limiter (9) decreases in thickness from the region of the edge of the opening radially outwards as far as its outer edge so that, under operating conditions, the surface pressure in the region of the resilient displacement limiter (9) is substantially homogeneous over its width.

2. Cylinder head gasket according to claim 1, **characterised in that** the decrease in the thickness of the resilient displacement limiter (9) is formed by a bevel (10, 11).

3. Cylinder head gasket according to claim 1 or 2, **characterised in that** the resilient displacement limiter (9) decreases in thickness in steps.

4. Cylinder head gasket according to any one of claims 1 to 3, **characterised in that** a carrier plate (5) is provided which has a cranked portion (7) which accommodates a folded-over edge (8) of a folded-edge plate (6).

5. Cylinder head gasket according to claim 4, **characterised in that** the folded-over edge (8) decreases in thickness.

6. Cylinder head gasket according to claim 4, **characterised in that** the cranked portion (7) decreases in thickness.

7. Cylinder head gasket according to any one of claims 1 to 3, **characterised in that** the resilient displacement limiter (9) is formed integrally with a carrier plate (5).

8. Cylinder head gasket according to any one of claims 1 to 3, **characterised in that** the resilient displacement limiter (9) is arranged radially in a corresponding opening of a carrier plate (5).

9. Cylinder head gasket according to any one of claims 1 to 8, **characterised in that** the resilient displacement limiter (9) or its folded-edge plate portion is rounded in the region of the opening (2).

## Revendications

1. Joint de culasse métallique pour un moteur à combustion interne comportant une tôle de protection (1a) tournée vers la culasse du moteur à combustion à l'état monté, qui est munie d'une ou de plusieurs ouvertures (2) disposées les unes à côté des autres correspondant aux chambres de combustion du moteur à combustion interne, la tôle de protection (1a) présentant autour de chaque ouverture (2), écartée de ces dernières par une portion de tôle laissée droite (3) dans la zone du bord de l'ouverture une nervure (4), à côté de laquelle est disposé autour de chaque ouverture radialement vers l'intérieur à partir de chaque nervure (4) adjacente à la culasse par son sommet un limiteur de course élastique pour la nervure (4), qui forme également un surhaussement du joint, **caractérisé en ce que** le limiteur de course élastique (9) diminue en épaisseur radialement vers l'extérieur à partir de la zone du bord de l'ouverture jusqu'à son bord extérieur, de façon à ce que la pression superficielle dans la zone du limiteur de course élastique (9) soit sensiblement homogène sur sa largeur dans les conditions de fonctionnement.

2. Joint de culasse selon la revendication 1, **caractérisé en ce que** la diminution d'épaisseur du limiteur de course élastique (9) est produite par un chanfrein (10, 11).

3. Joint de culasse selon la revendication 1 ou 2, **caractérisé en ce que** la diminution d'épaisseur du limiteur de course élastique (9) est prévue pour être graduelle.

4. Joint de culasse selon l'une des revendications 1 à 3, **caractérisé en ce qu'**est prévue une tôle support (5) qui présente une section coudée (7) qui reçoit un bord relevé (8) d'une tôle à bord relevé (6).

5. Joint de culasse selon la revendication 4, **caractérisé en ce que** le bord relevé (8) est conçu pour diminuer en épaisseur.

6. Joint de culasse selon la revendication 4, **caractérisé en ce que** la section coudée (7) est conçue pour diminuer en épaisseur.

7. Joint de culasse selon l'une des revendications 1 à 3, **caractérisé en ce que** le limiteur de course élastique (9) est constitué d'une seule pièce avec la tôle support (5).

8. Joint de culasse selon l'une des revendications 1 à 3, **caractérisé en ce que** le limiteur de course élastique (9) est disposé radialement dans une ouverture correspondante d'une tôle support (5).

9. Joint de culasse selon l'une des revendications 1 à 8, **caractérisé en ce que** le limiteur de course élastique (9) et/ou sa section en tôle à bord relevé est arrondi dans la zone de l'ouverture (2).
